# EUROPEAN PATENT SPECIFICATION

(11) **EP 2 669 530 B1**
(45) Date of publication and mention of the grant of the patent: **20.11.2019**
(21) Application number: 13167173.7
(22) Date of filing: 09.05.2013
(51) Int. Cl.: F16B 2/14, F16B 12/20, F16B 12/32

(54) **Anchoring arrangement for fixing members together**
Verankerungsanordnung zum Befestigen von Elementen aneinander
Dispositif d'ancrage pour la fixation de membres

(30) Priority: 01.06.2012 HU 1200336
(43) Date of publication of application: 04.12.2013
(73) Proprietor: Pataki, Mihaly, 6000 Kecskemet (HU)
(72) Inventor: Pataki, Mihaly, 6000 Kecskemet (HU)
(74) Representative: Farkas, Tamas

(56) References cited:
- EP-A1- 0 493 681
- EP-A2- 2 390 430
- DE-A1- 2 252 970
- DE-A1- 10 110 799
- DE-A1- 19 711 657
- FR-A1- 2 256 996
- FR-A1- 2 474 115
- US-A- 3 971 186
- US-A- 4 570 757

## Description

This invention relates to an anchoring arrangement for fixing a first member and a second member together in a relative position to each other, wherein at least the first member is at least a partially hollow member having a surface with an aperture opening into the cavity.

Some items, such as modular structural blocks of machines, control cabinets, air handling equipment, furniture, cabinets, shelves, tables, etc. are often needed to be fixed to one another in order to prevent the elements from moving relative to each other. Such fixing is achieved by a variety of ways, items are fixed to each other either by detachable or permanent joint. An obvious advantages of detachable joints is the non-destructive fixing, and the possibility of non-destructive removal of fixing. A preferred method of fastening is interconnecting tube like elements, e.g. extruded profiles arranged on the edges of modules.

The detachable joints are usually bolted joints, which are placed in the walls of cavities formed at the edges of modules or in bores formed on hollow profiles framing the module. Inside the tubular element, however, is not easy to fit and tighten the elements of a screw connection, since the interior of the tubular elements are difficult to access, and the screw connection usually must be placed at a greater distance from the end of the tubular element, where the task can be achieved only by special tools.

This problem is to be solved by a device disclosed in the patent US 4,514,107, which provides relative fixing of two parallel tubular member, wherein a first bore is prepared in the first member and an opposite bore in the second member, into which a threaded end of a threaded rod screwed. At the other end of the threaded rod a head is provided, which fits through the first bore. A pipe section perpendicular to the members is placed between the parallel pipes, which surrounds the threaded rod and serves as a spacer. A slotted wedge is inserted between the head section of the threaded rod and the inner wall of the element, whereby the threaded rod stressed by tension, thus fixing the two parallel tubular elements relative to one another. The wedge can be driven in its stretched position without special tools, by means of a rod inserted into the tube. The fixation can be performed without the transverse tube section, but the entire length of each element should be hollowed.

The main drawback of the solution is that the wedges must be placed in inaccessible places by a separate operation and an additional tool e.g a beating rod is needed, and the wedge can be loosened due to a great load. Another drawback is that value of the clamping force is accidental as being a function of the hammering force, and several detachable joints arranged between tubular elements can be mounted or dismounted from the direction of the end of the tubular element only sequentially, one by one. This solution, therefore, does not allow quick and easy relative fixing of parallel tubular elements, especially when the elements are not hollow in their full lengths.

The document DE 101 10 799 A shows a further anchoring arrangement of the prior art, in which I-shaped wedges and a screw are used to mount two elements together, said wedges grippinig behind protruding edges of U-shaped profiles comprised by the elements.

Therefore, the object of the present invention is to provide a solution for fixing hollow elements relative to each other, which overcomes the drawbacks of the prior art, it does not require either working in inaccessible places or implementing separate fitting operations, it does not loosen by increased stresses, the magnitude of fixing force can accurately be predetermined, joints sequentially arranged in the tubular elements can be fixed and detached by a single and quick operation, even without the need of entire length of both elements would be hollow.

The aim of the invention is achieved by providing an anchoring arrangement in accordance with claim 1.

The self-locking joint comprises a thread formed on the translation bar, which is driven into a thread of a threaded sleeve connected to the motion plate.

The threaded sleeve is arranged on a plate fixed to the motion plate.

The anchoring arrangement is provided with a bottom wall fixed to the plate and the motion plate as well.

A plurality of stretchers can be arranged in the motion plate, and the of surface of the first member is provided by apertures, the number of which is at least equal to the number of the stretchers, and the surface of the second member is provided with hooks, the number of which is at most equal to the number of apertures.

The invention will be illustrated hereinafter with reference to the accompanying drawings, describing its preferred embodiments in details. In the drawings:
Fig. 1 shows a preferred embodiment of the anchoring arrangement according to the invention, and
Fig. 2 shows a further preferred embodiment of anchoring arrangement according to the invention, wherein multiple stretchers are used.

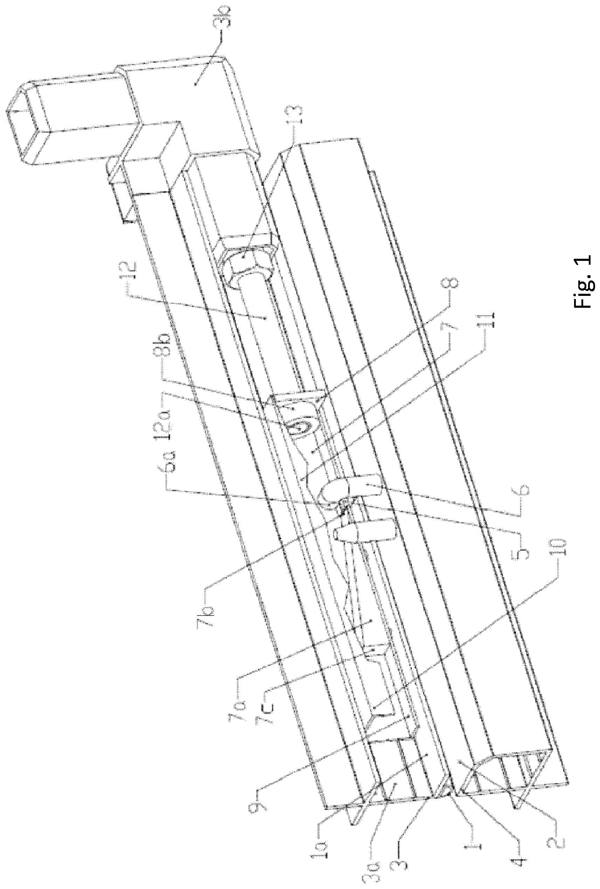

Fig.1 shows a preferred embodiment of the anchoring arrangement according to the invention in a position before fixing. The anchoring arrangement serves the purpose of fixing a first member 3 and a second member 4, for example extruded hollow profiles, or other elements in a relative position by contacting fitting surfaces 1,2, wherein at least the first member 3 is at least partly hollow member 3 containing a cavity 3a. The second member 4 can be wholly or partially hollow or a solid member 4. fitting surfaces 1,2, The first member 3, e.g. a member 3 having a hollow, tubular form in at least one length thereof, has a first fitting surface 1, the second member 4 has a second fitting surface 2, which is, in this embodiment, a fitting surface 2 of a member 4 having tubular form as well. The surface 1 has an aperture 5, into which a hook 6 arranged in the surfaces 2 can be fitted, so that at least an end 6a of the hook 6 is entirely positioned inside the cavity 3a of the member 3.

A motion plate 7 is arranged along the internal surface 1a of the cavity 3a adjacent to surface 1, in which a stretcher 7a is retained. In a position prior to fixing as it is shown in Fig.1, a tip 7b tip of the stretcher 7a is closer to the aperture 5 than the base 7c of the stretcher 7a. The stretcher 7a extending outside the area of the aperture 5 is connected to a plate 8 beyond the edge of the aperture 5 opposite the stretcher 7a, which plate 8 is preferably perpendicular to the stretcher 7a. The stretcher 7a and the plate 8 form walls of a hollow body 11 slidably inserted in the cavity 3a, and it has a further bottom wall 9, in a further preferred embodiment a wall 10 opposite the motion plate 7, an upper wall (not shown) connected to the wall 10 and the plate 8 as well, the use if which increases the strength of the hollow body 11 made of the motion plate 7 and the plate 8. A threaded translation bar 12 is connected to the plate 8, which extends by the end 3b of the member 3, where it is preferably provided by an inner opening for hexagon spanner known per se. Nut 13 is secured on the threaded translation bar 12 against rotation, that is the nut 13 rotates with the bar 12 so the translation bar 12 cannot slide out the end 3b, and the translation bar 12 also secured in the vicinity of the end 3b against movement toward the cavity 3a in known manner, e.g. by a washer, securing nut or the like, well known for a skilled person.

The threaded translation bar 12 cannot be displaced in a threaded sleeve 8b due to the axial force occurring thereinside, thus forming a self-locking arrangement. The self-locking connection is formed by a thread arranged in the translation bar 12 screwed into the thread of the sleeve 8b secured against rotation and fixed in the member 8 and the thread of the threaded sleeve 8b itself. Detachment of the arrangement can be achieved by oppositely rotating the translation bar, and it occurs when the stretcher 7a returns to a position shown in Fig. 1. In this position the member 4 can be removed from member 3.

If, in the position before fixing shown in Figure 1, the translation bar 12 is rotated for driving it into the threaded sleeve 8b - i.e. by fitting a suitable tool in the opening for hexagon spanner mentioned above - the body 11 and thus the motion plate 7 and the stretcher 7a as well are displaced below the head 6a of the hook 6 and between the head 6a and the wall la of the cavity 3a. Thus, during a further rotation of the translation bar 12, stretcher 7a shifts the member 4 toward the surface 1 by means of the hook 6 attached to the surface 2 until surfaces 1,2 fit together. By further rotating the translation bar 12 the surfaces 1,2 can be pressed to each other, their relative position can be fixed.

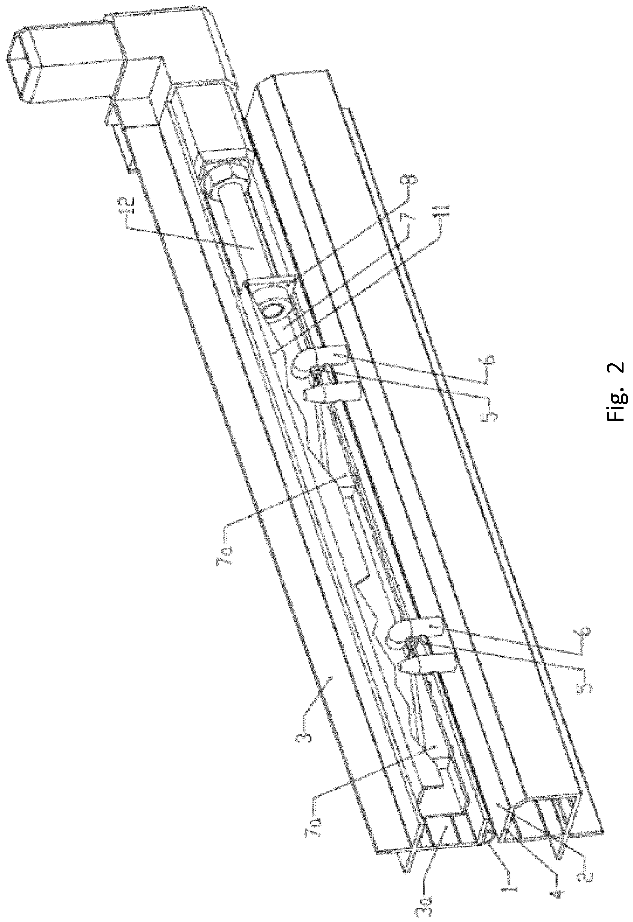

A further preferred embodiment of the anchoring arrangement according to the invention is shown in Figure 2. In this embodiment, a plurality of stretchers 7a are arranged and fixed successively on the motion plate 7 of the body 11 at equal or preferably selected distances from each other. During fixing operation the stretchers 7a move simultaneously fix the members 3,4 to each other at several places along the surfaces 1,2. Depending on the desired fixing length an arbitrary number of pairs formed by stretchers 7a and 6 hooks may be positioned along the sufaces1,2. In this case, the surface 1 of the first member 3 is provided with apertures 5, the number of which is at least equal to the number of stretchers 7a, and the surface of the second member 4 is provided with hooks 6, the number which of is at most equal to the number of apertures 5.

Fixing the relative position of the members 3,4 can be accomplished by the following method. In the method, the surface 1 of the member 3, and the surface 2 of the member 4 are juxtaposed so that the end 6a of the hook 6 fixed on the surface 2 is inserted into the cavity 3a of the first member 3 through the aperture 5 provided on the surface 1, then rotating the translation bar 12, moving the end 6a of the hook 6 onto the cavity 3a by means of the stretcher 7a, that the stretcher 7a is forced in between an inner surface 1a of the cavity 3a and the end 6a of the hook 6 by rotating the translation bar 12 until the surfaces 1,2 of said first and second members 3,4 contact each other. Then, the stretcher 7a will be pressed to the end 6a by further rotating the translation bar 12. Rotating the translation bar 12 can be accomplished by means of a hand tools or i.e. by screwdriver machine. The joint can be detached by loosening of the translation bar 12.

The anchoring arrangement according to the present invention is suitable for easily interconnecting and fixing all parallel profiles, members 3,4 or sides of modules. It can be widely used in all areas of the industry, where a reliable and simple fixing of parallel sides of modules is required. Such modules are e.g. building blocks of modular equipment, control panels, air handling equipment, furniture products, cabinets, shelves, tables, etc.

The anchoring arrangement according to the invention allow creating fixings by small effort, but with very high force with sealed and unsealed properties, if necessary. Members 3,4 fixed in such a way can be easily disassembled without damage. Fixing and disassembly can be repeated one after another by arbitrary times without the smallest damage of members 3,4 avoiding degradation of the fixing strength. It can be used particularly beneficially where the side of the module is not possible or difficult to access, as the proper fixing can be achieved along the whole length of surfaces 1,2 being either several meters with even and high clamping force, by rotating a single threaded translation bar 12. Thus, up to tens of screws can be replaced. Direct access is needed only to the end of member 3.

A definite advantage of the arrangement for fixing at least partially hollow members to each other according to the invention is among others that it eliminates the disadvantages of prior art solutions, it requires neither particular work in inaccessible places nor implementation of separate fitting operations, but it does not loosen even by increased stresses, the degree of clamping force can be accurately determined, joints arranged sequentially in the tubular elements can quickly and simply be clamped and detached by a single operation, and without the need of the entire length of both elements must be hollow.

## Claims

1. Anchoring arrangement comprising a first member (3) and a second member (4) for fixing together said members (3,4) in a relative position to each other, wherein at least the first member (3) is at least partially hollow member (3) having a cavity (3a) and a surface (1) with an aperture (5) opening into the cavity (3a), and a stretcher (7a) is arranged in the cavity (3a), and a hook (6) suitable for fitting into the aperture (5) is attached to a surface (2) of the second member (4), the stretcher (7a) is attached to a motion plate (7) connected by a self locking joint to an end (12a) of a translation bar (12) extending in the first member (3) up to the vicinity of the end (3b) of the first member (3), and the translation bar (12) is rotatably mounted on the first member (3), the self-locking joint comprises a thread formed on the translation bar (12), which is driven into a thread of a threaded sleeve (8b) connected to the motion plate (7) wherein the threaded sleeve (8b) is arranged on a plate (8) fixed to the motion plate (7), and a bottom wall is (9) fixed to the plate (8) and the motion plate (7), and the stretcher (7a) and the plate (8) form walls of a hollow body (11) slidably inserted in the cavity (3a).

2. Anchoring arrangement according to claim 1, ***characterized in that*** the hollow body (11) has a further wall (10) opposite the motion plate (7), and an upper wall connected to the further wall (10) and the plate (8).

3. Anchoring arrangement according to claim 2, ***characterized in that*** a plurality of stretchers (7a) is arranged in the motion plate (7), and the of surface (1) of the first member (3) is provided by apertures (5), the number of which is at least equal to the number of the stretchers (7), and the surface (2) of the second member (4) is provided with hooks (6), the number of which is at most equal to the number of apertures (5).

## Patentansprüche

1. Verankerungsanordnung, umfassend ein erstes Element (3) und ein zweites Element (4) zum Zusammenhalten der Elemente (3, 4) in einer relativen Position zueinander,
wobei zumindest das erste Element (3) ein zumindest teilweise hohles Element (3) ist mit einem Hohlraum (3a) und einer Oberfläche (1) mit einer Öffnung (5), die in den Hohlraum (3a) mündet,
und ein Spanner (7a) in dem Hohlraum (3a) angeordnet ist,
und ein Haken (6), der zum Einpassen in die Öffnung (5) geeignet ist, an einer Oberfläche (2) des zweiten Elements (4) befestigt ist,
der Spanner (7a) ist an einer Bewegungsplatte (7) befestigt, die durch ein selbsthemmendes Gelenk mit einem Ende (12a) einer Translationsstange (12) verbunden ist, die sich im ersten Element (3) bis in die Nähe des Endes (3b) des ersten Elementes (3b) erstreckt,
und die Translationsstange (12) drehbar an dem ersten Element (3) angebracht ist,
die selbsthemmende Verbindung umfasst ein an der Translationsstange (12) ausgebildetes Gewinde, das in ein Gewinde einer mit der Bewegungsplatte (7) verbundenen Gewindehülse (8b) eingetrieben ist,
***dadurch gekennzeichnet,* dass**
die Gewindehülse (8b) auf einer an der Bewegungsplatte (7) befestigten Platte (8) angeordnet ist, und eine Bodenwand (9) an der Platte (9) und der Bewegungsplatte (7) befestigt ist,
und der Spanner (7a) und die Platte (8) Wände eines Hohlkörpers (11) bilden, der verschiebbar in den Hohlraum (3) eingesetzt ist.

2. Verankerungsanordnung nach Anspruch 1, ***dadurch gekennzeichnet,* dass** der Hohlkörper (11) eine der Bewegungsplatte gegenüberliegende weitere Wand und eine obere Wand aufweist, die mit der Wand (1) und der Platte (8) verbunden ist.

3. Verankerungsanordnung nach Anspruch 2, ***dadurch gekennzeichnet,* dass** in der Bewegungsplatte (7) mehrere Spanner (7a) angeordnet sind, und die Oberfläche (1) des ersten Elements (3) durch Öffnungen bereitgestellt wird, deren Anzahl mindestens der Anzahl der Spanner (7a) entspricht, und die Oberfläche (2) des zweiten Elements (4) ist mit mehreren Haken (6) versehen, deren Anzahl höchstens der Anzahl der Öffnungen entspricht.

## Revendications

1. Dispositif d'ancrage comprenant un premier membre (3) et un deuxième membre (4) pour la fixation ensemble lesdits éléments (3, 4) dans une position relative l'un par rapport à l'autre, dans lequel au moins le premier élément (3) est un élément (3) au moins partiellement creux ayant une cavité (3a) et une surface(1) avec une ouverture (5) qui s'ouvre dans la cavité (3a), et un tendeur (7a) est agencé dans la cavité (3a) et un crochet (6) adapté pour s'insérer dans l'ouverture (5) est attaché à une surface (2) du deuxième élément (4), la tendeur (7a) est attaché à une plaque de mouvement (7) reliée par une charnière à blocage automatique à une extrémité (12a) d'une barre de translation (12) qui s'étend dans le premier membre (3) jusqu'au voisinage de l'extrémité (3b) du premier membre (3), et la barre de translation (12) est montée à rotation sur le premier élément (3), le joint autobloquant comprend un filetage formé sur la barre de translation (12) qui est entraîné dans un filetage d'un manchon fileté (8b) relié à la plaque de mouvement (7), ***caractérisé en ce que*** le manchon fileté (8b) est agencé sur une plaque (8) fixée à la plaque de mouvement (7) et une paroi de fond (9) est fixée à la plaque (8) et à la plaque de mouvement (7), et le tendeur (7a) et la plaque (8) forment des parois d'un corps creux (11) inséré de manière coulissante dans la cavité (3a).

2. Dispositif d'ancrage selon la revendication 1, ***caractérisé en ce que*** le corps creux (11) a une autre paroi (10) opposée à la plaque de mouvement (7), et un paroi supérieur relié au paroi (1) et à la plaque (8).

3. Dispositif d'ancrage selon la revendication 2, ***caractérisé en ce que*** une pluralité de tendeurs (7a) est disposée dans la plaque de mouvement (7), et la surface (1) du premier membre (3) est fournie par des ouvertures (5), dont le nombre est au moins égal au nombre des tendeurs (7a), et la surface (2) du deuxième élément (4) est munie de crochets (6) dont le nombre est au plus égal au nombre d'ouvertures (5).
